# EUROPEAN PATENT APPLICATION

(11) **EP 0 766 109 A1**
(43) Date of publication of application: **02.04.1997**
(21) Application number: 95202616.9
(22) Date of filing: 28.09.1995
(51) Int. Cl.: G02B 6/38

(54) **Optical arrangement**

(71) Applicant: ALCATEL BELL Naamloze Vennootschap, B-2018 Antwerpen 1 (BE)
(72) Inventor: Leyssens, François Jeanne Charles, B-2640 Mortsel (BE); Vetter, Peter Johannes, B-2000 Antwerp (BE); De Pestel, Geert Maurits Joris, B-9850 Nevele (BE); Migom, Frédéric Fernand Marcel, B-8500 Kortrijk (BE)

(57) **Abstract**

The optical arrangement enables optical connection of optical fiber conductors (F) by alignment and abutment of extremities of these optical fiber conductors. It includes a first plate (P1) with a first extremity plane (P1E) and a second plate (P2) with a second extremity plane (P2E), at least parts of which are tangent when the optical connection is realized. The first and the second plate have a surface plane with a plurality of holding grooves (G) in which said optical fiber conductors are positioned. The extremities of the optical fiber conductors end in the tangent planes. At least one of the first plate (P1) and of the second plate (P2) has at least one extending part protruding over the second and the first plate respectively when the connection is realized, thereby creating overlapping and overlapped parts. The arrangement additionally includes cooperating positioning grooves (P1PG, P2PG) and positioning ledges (P1L, P2L) which are part of teh overlapping and of the overlapped parts. They are so positioned that the optical connection is realized by cooperation of these positioning ledges and positioning grooves.

In an alternative embodiment, a third plate (P3) is used which is placed on top of a first (P1') and second plate (P2') whilst realizing cooperation of positioning ledges and grooves on these plates.

## Description

The present invention relates to an optical arrangement as described in the preamble of claim 1.

Such an arrangement is already known in the art, e.g. from the *European Patent Application 0564207* and more specifically from Fig. 1 thereof. Therein, an optical connector is disclosed with first and the second plates constituted by a two part plate indicated as item 10 in the figure and which carry optical fiber conductors in grooves thereon.

In order to correctly position the different parts of the connector and the to be connected optical fiber conductors, the known connector further comprises an alignment or positioning means having an alignment pin, an alignment plate and two complementary grooves, one profiled in the alignment plate and the other one profiled in the top plane surface of the two part plate, so that in combination the alignment plate placed on top of the two part plate firmly holds the the alignment pin within the alignment grooves

It is well known, that in connectors such as the above known one, to avoid considerable optical power losses due to misalignment, a lot of dimension tolerances and assembly tolerances have to be taken into account especially because of the different pieces of which the alignment means are composed.

An object of the present invention is to provide an optical arrangement of the above known type but wherein the above tolerances can be minimized.

According to the invention, this object is achieved by an optical arrangement according to claim 1.

In this arrangement, the above mentioned tolerances are minimized because the alignment parts, i.e. the alignment grooves and the alignment ledges, are part of the first and of the second plate, and are thus made of the same material as these plates and realized using the same techniques. Different realisations of the alignment means are possible, e.g. the alignment grooves can be located on the first plate and the ledges on the second plate, one groove and one ledge can be located on the first plate and a groove and a ledge on the second plate respectively, the grooves can all be located on the second plate and the ledges on the first plate. Also the extending parts and the overlapping parts can be realized in different ways, e.g. there can be one extending part for each plate, overlapping the other plate, the extending parts can all be on the same plate or on both plates, they can be at the sides or in the middle of the plates.

Another characteristic feature of the present invention is the inclusion of pressure means as described in claim 2, whereby the optical connection is optimized thanks to the fact that after abutment is realized, optimal alignment is obtained by making sure that all lateral gaps between the positioning grooves and the positioning ledges is avoided.

Optimization of the sliding of the two plates towards each other to realize the abutment is obtained by chamfering the extremity of at least one of the alignment means as described in claim 3.

The location of the second pressure means in either the male or the female housing as described in claim 4 depends on the choice to move the first plate towards the second one or vice versa and also on the choice of placing the housing in a preponderant fix electronic equipment position or in a preponderant removeable electronic position.

Different ways of realizing the pressure means are disclosed in claims 5 to 8.

The above mentioned object of the invention is also realized by means of an alternative realization based on the same principle and which includes a third plate with alignment means which is to be brought on top of the first and the second plate as described in claim 9.

Characteristic features similar to those described with respect to claim 1 are applicable to claim 9 and are disclosed in claims 10 to 16.

An additional characteristic feature with respect to the latter arrangement is described in claim 17 and relates to the use of holding grooves in the third plate, as a result of which the fiber conductors can be positioned in a more efficient way in the grooves. Indeed, in this way the fibers can be better held in the surrounding cavity formed by the cooperating grooves of the third plate and of the first and second plates when realizing the requested connection.

The above mentioned and other objects and features of the invention will become more apparent and the invention itself will be best understood by referring to the following description of an embodiment taken in conjunction with the accompanying drawings wherein:
Fig. 1 is a front view of a first embodiment of a connector according to the invention,
Fig. 2, is a lateral cross section of the connector of FIG. 1 along I-I;
Fig. 3 is a top view of how a connection is realized with a connector such as that of Fig. 1,
Fig. 4 is a front view of an alternative embodiment of a connector according to the invention, and
Fig. 5 is a lateral cross section of the connector of FIG. 3 along IV-IV.

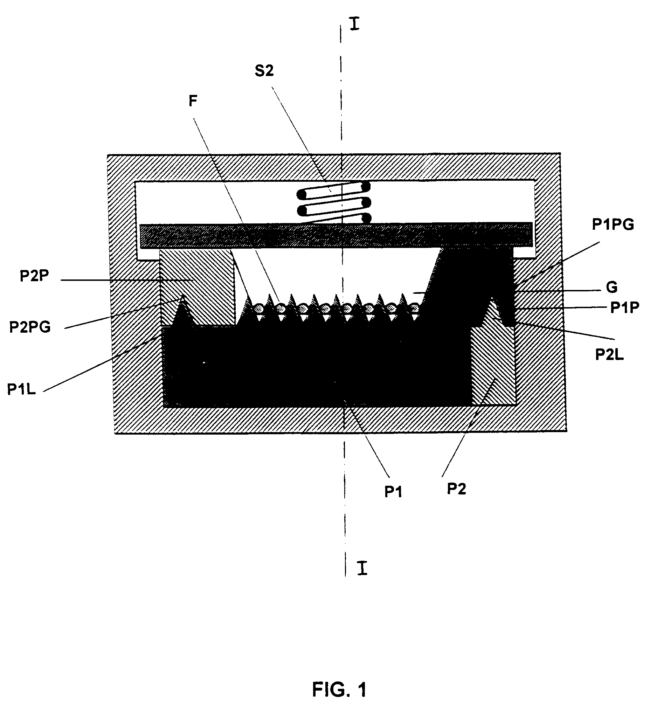

A first embodiment of the optical arrangement or optical connector is described hereafter with reference to figures 1, 2 and 3.

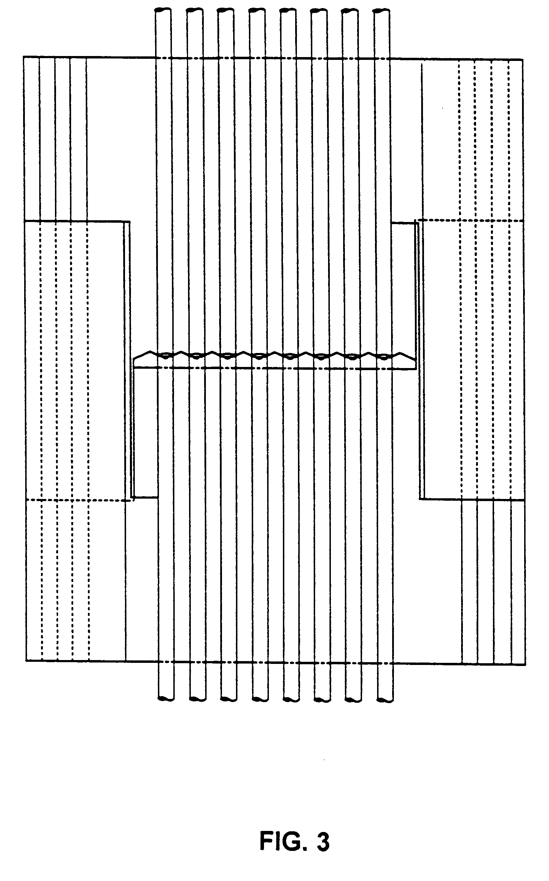

The connector comprises two plates P1 and P2 with a surface of which the middle part is flat and includes parallel, lateral V-grooves G wherein optical fiber conductors F are positioned. The extremities of the fiber conductors F end in an extremity plane P1E and P2E respectively. Both sides of the plates have longitudinally extended parts having a rectangular form as can be seen in Fig.3 and one of the sides with the extended part P1P and P2P is elevated. However the elevated sides are not the same ones in the first and the second plate. On the not elevated side part of the surface of P1 and P2 a lateral positioning ledge is provided having a V form, i.e. P1L and P2L respectively. The extended elevated parts have in their lower surface a V shaped positioning groove, P1PG and P2PG. The positioning grooves and the positioning ledges are parallel with the grooves G and are together with the extending parts so dimensioned and positioned that the positioning grooves can be slided over the positioning ledges or vice versa whereby the elevated extended parts overlap the non elevated side parts, and that by performing this sliding, the extremities of the fiber conductors in the grooves of the first plate and of the second plate are brought in abutment and in alignment. This situation is shown in Fig. 3.

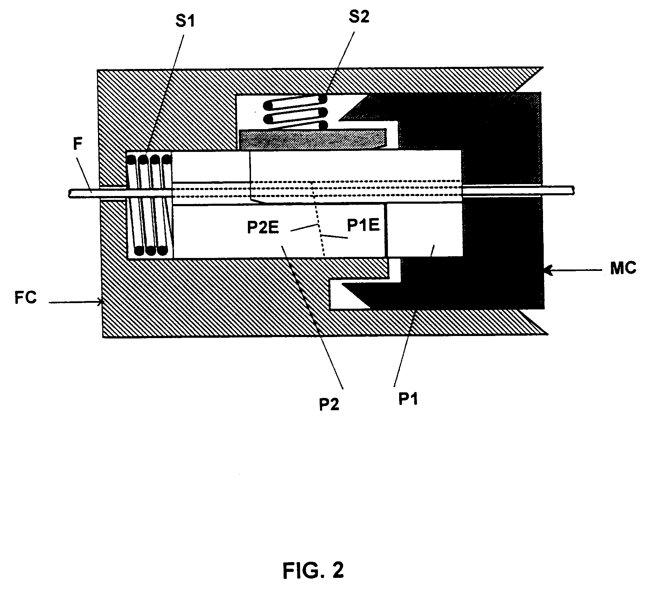

P1 and P2 are part of a male and a female housing, thereby forming a male connector part MC and a female connector part FC respectively. To facilitate the sliding and to realize a more optimal abutment, a longitudinal spring S1 is foreseen in FC as can be seen in Fig. 2. S1 exerts a longitudinal force parallel to the grooves G on P1 and P2.In addition a second lateral spring S2 is foreseen in FC which is so located that it exerts a force perpendicular to the flat surface of P1 and P2 only when abutment has already been realized. In this way, the positioning ledges are pushed in the positioning grooves in such a way that, as mentioned earlier, there are no lateral gaps between the ledges and the grooves, thereby optimizing the alignment between respective abutting fiber conductors.

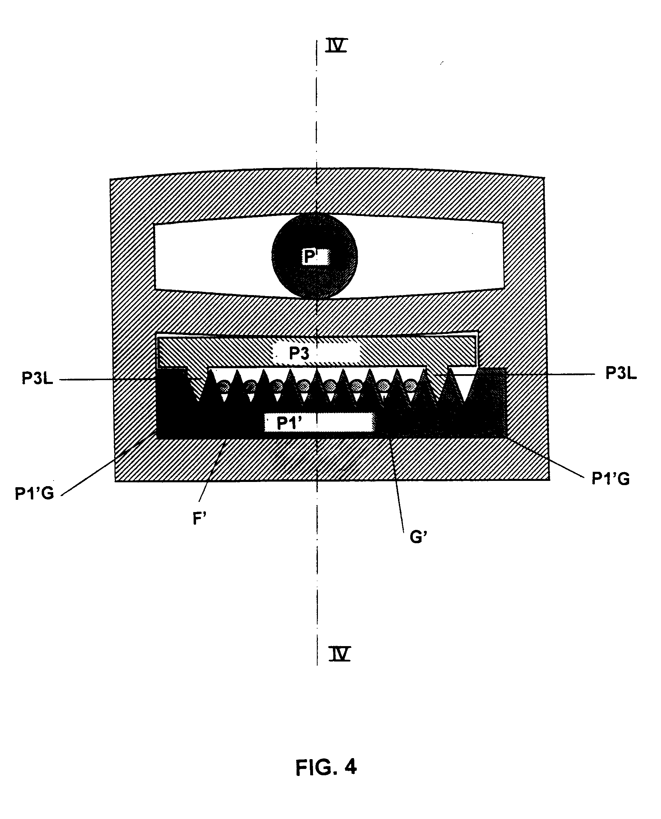

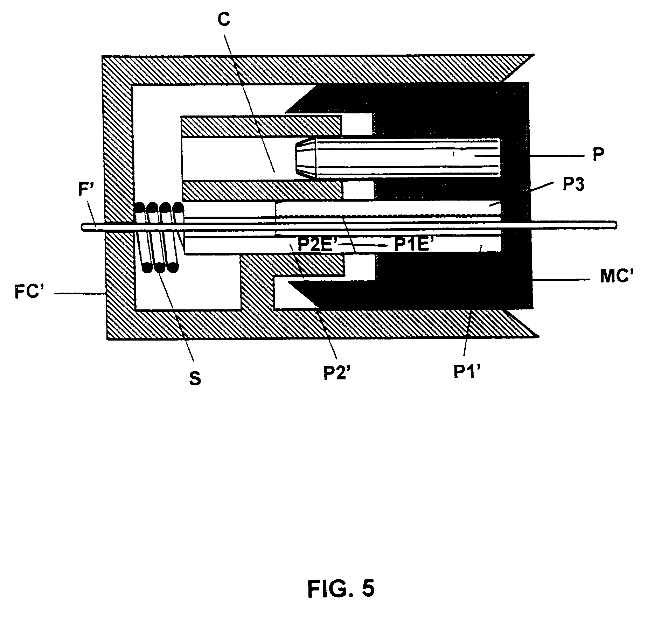

In a second embodiment shown in figures 4 and 5, the connector comprises two plates P1' and P2' which have the same form. They have a flat surface with parallel V-grooves G' wherein fiber conductors F' are positioned. The extremities of the fiber conductors end in respective extremity planes P1E' and P2E'. To realize abutment the latter extremity planes are brought in abutment. The connector also includes a third plate P3 which has a flat lower surface with 2 parallel V-shaped ledges P3L fitting in corresponding grooves of P1' and P2' of which only the grooves P1'G of P1' are shown. P2' is part of a female connector part FC' and P1' and P3 are part of a male connector part MC'.

In FC' a longitudinal spring S is provided between a housing of the connector part and P2' to exert a longitudinal force perpendicular to P2E' and P1E' when P1' and P2' are brought in abutment. Additionally to ensure a good cooperation between the positioning ledges and the associated grooves, a pin P is foreseen in MC' top of P1' and a cavity C is foreseen in FC' wherein P can fit. When MC' is inserted in FC', to realize abutment of the extremities of the fiber conductors, P slides in C. P and C are so located in MC' and in FC' and so dimensioned, that P starts exerting a force perpendicular on the surface of P3, when P1E' and P2E' abut. This again, as for the above described embodiment to optimise the fitting of the ledges in the grooves and thereby the alignment of the fiber conductors.

As mentioned earlier different ways can be thought of to realize the required forces during the realization of the connection, as well as different forms of plates and alignment grooves and ledges.

It has also to be noted that, to facilitate the start of the sliding of the ledges in the grooves the extremities thereof are chamfered (not shown).

While the principles of the invention have been described above in connection with specific apparatus, it is to be clearly understood that this description is made only by way of example and not as a limitation on the scope of the invention.

## Claims

**1.** Optical arrangement enabling optical connection of optical fiber conductors (F) by alignment and abutment of extremities of respective ones of said optical fiber conductors, said arrangement including a first plate (P1) with a first extremity plane (P1E) and a second plate (P2) with a second extremity plane (P2E), at least part of said first extremity plane and of said second extremity plane being tangent when said optical connection is realized, thereby forming a first tangent tangent surface and a second tangent surface respectively, said first plate and said second plate having a first surface plane and a second surface plane respectively with a plurality of holding grooves (G) in which said optical fiber conductors are positioned,said extremities of said optical fiber conductors ending in respective ones of said first tangent plane and of said second tangent plane, said arrangement also including alignment means (P1PG, P1L, P2PG, P2L),
characterized in that at least one of said first plate (P1) and of said second plate (P2) has at least one extending part protruding over said second plate and said first plate respectively when said connection is realized, thereby creating overlapping parts and overlapped parts, and that said alignment means includes cooperating positioning grooves (P1PG, P2PG) and positioning ledges (P1L, P2L) being part of said overlapping parts and of said overlapped parts and being so positioned that said optical connection is realized by cooperation of said positioning ledges and said positioning grooves over such a length with respect to said overlapping parts and to said overlapped parts that said extremities of said respective optical fiber conductors in said holding grooves align and abut

**2.** Optical arrangement according to claim 1, characterized in that said arrangement also includes a first pressure means (S1) to exercise pressure on at least either one of said first plate (P1) and said second plate (P2) in a direction parallel to an axis of said holding grooves to thereby realize said alignment and said abutment, and a second pressure means (S2) to exercise pressure on said overlapping parts and on said overlapped parts and in a direction perpendicular thereto when said abutment is realized, to thereby press said positioning ledges (P1L, P2L) into said posistioning grooves (P1PG, P2PG).

**3.** Optical arrangement according to claim 2, characterized in that said extremities of said respective optical fiber conductors (F) are brought in abutment by relatively bringing said first extremity plane (P1E) and said second extremity plane (P2E) towards each other by means of said first pressure means (S1) and relatively sliding said positioning ledges (P1L, P2L) into said positioning grooves (P1PG, P2PG), and that the extremities of said alignment means of at least one of said first plate and of said second plate are chamfered, thereby facilitating the start of said sliding

**4.** Optical arrangement according to claim 2, characterized in that said arrangement additionally includes a male housing and a female housing surrounding said first plate, and said second plate and said first pressure means respectively, said second pressure means being located in either said male housing or said female housing.

**5.** Optical arrangement according to claim 4, characterized in that said first pressure means is a resilient means.

**6.** Optical arrangement according to claim 4, characterized in that said second pressure means is a resilient means.

**7.** Optical arrangement according to claim 4, characterized in that said second pressure means is realized by a pin (P) deforming either said male housing or said female housing to realize said pressure on said overlapping parts and on said overlapped parts.

**8.** Optical arrangement according to claim 3, characterized in that said male and female housing form a unipart housing which also constitutes said first pressure means and said second pressure means, thereby realizing a substantially permanent connection of said optical fiber conductors.

**9.** Optical arrangement enabling optical connection of optical fiber conductors (F') by alignment and abutment of extremities of respective ones of said optical fiber conductors, said arrangement including a first plate (P1') with a first extremity plane (P1E') and a second plate (P2') with a second extremity plane (P2E'), at least part of said first extremity plane and of said second extremity plane being tangent when said optical connection is realized, thereby forming a first tangent tangent surface and a second tangent surface respectively, said first plate and said second plate having a first surface plane and a second surface plane respectively with a plurality of holding grooves (G') in which said optical fiber conductors are positioned,said extremities of said optical fiber conductors ending in respective ones of said first tangent plane and of said second tangent plane, said arrangement also including alignment means (P3L, P2'G),
characterized in that said optical arrangement additionnally includes a third plate (P3) having a third surface plane and that said alignment means include cooperating positioning grooves (P2'G) and positioning ledges (P3L) on each of said first surface plane and of said second surface plane, and on said third surface plane, so positioned that said optical connection is realized by bringing said first tangent plane and said second tangent plane in abutment and by positioning said third plate on top of said first plate and of said second plate in such a way that said positioning grooves and said positioning ledges cooperate.

**10.** Optical arrangement according to claim 9, characterized in that said arrangement also includes a first pressure means (S) to exercise pressure on at least either one of said first plate (P1') and said second plate (P2') in a direction parallel to an axis of said holding grooves (G') to thereby realize said abutment, and a second pressure means (P) to exercise pressure on said third surface plane in a direction perpendicular thereto when said abutment is realized, to thereby press said positioning (P3L) ledges into said positioning grooves (P2'G).

**11.** Optical arrangement according to claim 10, characterized in that said third plate (P3) is fixed on top of either said first plate or said second plate.

**12.** Optical arrangement according to claim 11, characterized in that said arrangement additionally includes a male and female housing surrounding said first plate, and said second plate and said first pressure means respectively, said second pressure means and said third plate being located in either said male housing or said female housing.

**13.** Optical arrangement according to claim 12, characterized in that said first pressure means is a resilient means.

**14.** Optical arrangement according to claim 12, characterized n that said second pressure means is a resilient means.

**15.** Optical arrangement according to claim 12, characterized in that said second pressure means is realized by a pin (P) deforming either said male housing or said female housing to realize said pressure on said third plate.

**16.** Optical arrangement according to claim 11, characterized in that said male and female housing form a unipart housing which also constitutes said first pressure means and said second pressure means, thereby realizing a substantially permanent connection of said optical fiber conductors.

**18.** Optical arrangement according to claim 9, characterized in that said third surface plane is provided with a plurality of holding grooves, each of which, when said connection is realized, forms with at least part of of a respective one of said holding grooves of said first surface plane and of said second surface plane a cavity able to hold a said optical fiber conductor.
